# EUROPEAN PATENT SPECIFICATION

(11) **EP 2 597 099 B1**
(45) Date of publication and mention of the grant of the patent: **15.08.2018**
(21) Application number: 11190292.0
(22) Date of filing: 23.11.2011
(51) Int. Cl.: C07F 9/54, B01F 17/00

(54) **Deep eutectic solvent and method for its preparation**
Tief eutektisches Lösungsmittel und Verfahren zu dessen Herstellung
Solvant eutectique profond et son procédé de préparation

(43) Date of publication of application: 29.05.2013
(73) Proprietor: King Saud University, 11421 Riyadh (SA)
(72) Inventor: A-Zahrani, Saeed Mohammed, 11421 Riyadh (SA); AlNashef, Inas Muen, 11421 Riyadh (SA)
(74) Representative: Goddar, Heinz J.

(56) References cited:
- MÜLLER U ET AL: "Tetraphenylphosphonium Pentachlorostannat, PPh4[SnCl5], und Tetraphenylphosphonium Pentachlorostannat Monohydrat, PPh4[SnCl5.H2O]", ACTA CRYSTALLOGRAPHICA SECTION C CRYSTAL STRUCTURE COMMUNICATIONS, vol. 52, no. 2, 15 February 1996 (1996-02-15), pages 330-333, XP55027771, ISSN: 0108-2701, DOI: 10.1107/S0108270195011073
- CHANG J C ET AL: "Synthesis and properties of new tetrachlorocobaltate (II) and tetrachloromanganate (II) anion salts with dicationic counterions", POLYHEDRON, vol. 30, no. 3, 9 November 2010 (2010-11-09), pages 497-507, XP028134572, ISSN: 0277-5387, DOI: 10.1016/J.POLY.2010.11.009
- URLAND W: "Neue Verbindungen der Lanthanoiden vom Typ/New Lanthanide Compounds of the Type [(C6H5)4E]MX4.8H2O (E = P, As; M = La, Ce, Pr, Sm, Eu, Gd, X = Cl, Br)", ZEITSCHRIFT FÜR NATURFORSCHUNG, TEIL B: ANORGANISCHE CHEMIE, ORGANISCHE CHEMIE, vol. 40, 1985, pages 496-499, XP9159588, ISSN: 0340-5087
- DATABASE CA [Online] CHEMICAL ABSTRACTS SERVICE, COLUMBUS, OHIO, US; 1987, DZHAVADYAN E A ET AL: "Onium catalysts for polymerization of epoxide compounds", XP002677967, retrieved from STN Database accession no. 107:78294 -& DZHAVADYAN E A ET AL: "Onium catalysts for polymerization of epoxide compounds", PLASTICESKIE MASSY, no. 4, 1987, pages 12-14, XP9159716, ISSN: 0554-2901
- KAREEM M A ET AL: "Phosphonium-Based Ionic Liquids Analogues and Their Physical Properties", JOURNAL OF CHEMICAL AND ENGINEERING DATA, vol. 55, no. 11, 11 November 2010 (2010-11-11), pages 4632-4637, XP008151255, ISSN: 0021-9568, DOI: 10.1021/JE100104V
- ABBOTT A P ET AL: "Ionic Liquid Analogues Formed from Hydrated Metal Salts", CHEMISTRY, A EUROPEAN JOURNAL, vol. 10, no. 15, 6 August 2004 (2004-08-06), pages 3769-3774, XP55027767, ISSN: 0947-6539, DOI: 10.1002/chem.200400127
- Anonymous: "Deep Eutectic Solvent", Wikipedia , 28 October 2011 (2011-10-28), XP002677968, Retrieved from the Internet: URL:http://en.wikipedia.org/w/index.php?ti tle=Deep_eutectic_solvent&direction=prev&o ldid=463911770 [retrieved on 2012-05-24]
- Anonymous: "Deep Eutectic Solvents: Eutectic Based Ionic Liquids", Ionic Liquids Group, University of Leicester, UK , 2011, XP002677969, Retrieved from the Internet: URL:http://www.leicester-ils.co.uk/deepeut ectics.html [retrieved on 2012-05-24]
- CHEN L ET AL: "Partial hydrolysis of Ti(III) and Ti(IV) chlorides in the presence of [PPh4]Cl", INORGANICA CHIMICA ACTA, vol. 267, no. 2, 1998, pages 271-279, XP55028160, ISSN: 0020-1693, DOI: 10.1016/S0020-1693(97)05766-6
- VARSHAVSKY Y S ET AL: "Remarks on the process of homogeneous carbonylation of rhodium compounds by N,N-dimethylformamide", JOURNAL OF ORGANOMETALLIC CHEMISTRY, vol. 692, no. 4, 4 January 2007 (2007-01-04), pages 887-893, XP005822788, ISSN: 0022-328X, DOI: 10.1016/J.JORGANCHEM.2006.10.040

## Description

The present invention relates to a deep eutectic solvent and a method for its preparation.

A deep eutectic solvent (DES) is a type of ionic solvent with special properties composed of a mixture of compounds which form an eutectic with a melting point much lower than either of the individual components. DESs are useful as solvents, as electrolytes for example in electroplating, electro-winning and electro-polishing and as catalysts. DESs are also used in separation processes. Although DESs have many common characteristics with ionic liquids they are considered as different type of solvents. Ionic liquids are composed entirely from ions while DESs have both ions and neutral molecules. In addition, ionic liquids are synthesized by chemical reactions while DESs are prepared by mixing and heating only. The first generation of eutectic solvents were based on mixtures of quaternary ammonium salts with hydrogen bond donors such as amines and carboxylic acids. Compared to ionic liquids that share many characteristics but are ionic compounds and not ionic mixtures, deep eutectic solvents are cheaper to make, much less toxic and sometimes biodegradable. The major advantage of the approach used for the synthesis of DESs is that common, non-toxic components can be used and that they are easy to make by just mixing two or more compounds with gentle heating and subsequent cooling to room temperature.

WO02/26701 relates to a method for the synthesis of DESs with a freezing point of up to 100°C by the reaction of one amine salt (I), such as choline chloride, with an organic compound (II) capable of forming a hydrogen bond with the ion of the amine salt, such as urea, wherein the molar ratio of I to II is from 1:1.5 to 1:2.5.

WO00/56700 relates to a method for the synthesis of deep eutectic solvents having a melting point of no more than 60°C, formed by the reaction of a quaternary ammonium compound or a mixture of two or more thereof with a halide of zinc, tin or iron, or a mixture of two or more thereof.

The publication of M.A. Kareem et al., J. Chem. Eng. Data 2010, 55, 4632-4637 relates to DESs successfully synthesized by mixing phosphonium salts with different hydrogen bond donors. These DESs have melting temperatures lower than 100°C. It was found that the type of the salt, the hydrogen bond donor and the molar ratio of both has a paramount effect on the DES properties like melting temperature, density, viscosity, pH or conductivity. The solubility of selected chemicals in this type of DESs is different from that in the ammonium based DESs. Another significant difference is the chemical reactivity. For example, it was reported in the literature that choline chloride, which is used in the synthesis of many ammonium based DESs, catalysed the conversion of fructose to other products while phosphonium salts used in this invention do not catalyse the conversion of fructose.

US 7,763,768 discloses the use of a deep eutectic solvent comprising a quaternary ammonium salt and different hydrogen bond donors as a solvent for the preparation of hydrogen peroxide.

Müller et al. Crystallographica Section C Crystal Structure Communications, Vol. 52, No. 2, 1996, 330-333 discloses tetraphenylphosphonium pentachlorostannat and tetraphenylphosphonium pentachlorostannat monohydrate.

Chang et al. Polyhedron, 30 (3) 2010, 497-507 discloses the synthesis and properties of tetra-chlorocobaltate (II) and tetrachloromaganate (II) anion salts with dicationic counterions.

Urland, Zeitschrift für Naturforschung, Teil B: Anorganische Chemie, Organische Chemie, 40, 1985, 496-499 discloses new compounds of the lanthanide type [(C₆H₅)₄E]MX₄ x 8H₂O (E = P, As; M = La, Ce, Pr, Sm, Eu, Gd, X = Cl, Br).

Dzhavadyan, Plasticheskie Massy, 4, 1987, 12-14 discloses onium catalysts for polymerization of epoxide compounds.

Kareem et al., Journal of Chemical and Engineering Data, 55, 2010, 4632-4637 discloses phosphonium-based ionic liquid analogues and their physical properties.

Wikipedia, Version of 28 October 2017 discloses an article related to deep eutectic solvents.

The webpage from Ionic liquids group of the University of Leicester discloses an article referring to deep eutectic solvents: eutectic based ionic liquids.

Chen et al. Inorganica Chimica Acta, 267, 1998, 271-279 discloses partial hydrolysis of Ti (III) and Ti (IV) chlorides in the presence of [PPh4]Cl.

Varshavsky et al. Journal of Organometallic Chemistry, 692, 2007, 887-893 discloses remarks on the process of homogeneous carbonylation of rhodium compounds by N,N-dimethylformamide.

It is an object of the present invention to provide a new type of deep eutectic solvents. In particular, an alternative type of deep eutectic solvent shall be provided having freezing points below 100°C and altered physical and chemical properties compared to the prior art.

It is a further object to provide a method for preparation of the inventive deep eutectic solvents.

The above objects are achieved by the subject-matter of claim 1.

In detail, the above objects are achieved by a deep eutectic solvent constituted by a mixture of methyltriphenylphosphonium bromide and zinc chloride in a molar ratio from 1:1 to 1:3, preferably 1:2, or a mixture of methyltriphenylphosphonium bromide and nickel nitrate hexahydrate in a molar ratio from 1:1 to 1:3, preferably 1:2.

Described herein is a deep eutectic solvent comprising:
a) at least one phosphonium salt (I) of the formula R¹ R² R³ R⁴ P⁺ X⁻
   and
b) at least one compound (II) of the formula MYₙ or MYₙ · m(H₂O)
   wherein R¹, R², R³ and R⁴ are independently selected from H, substituted or unsubstituted, linear or branched alkyl, alkoxy, cycloalkyl, aryl or alkaryl or wherein two of R¹, R², R³ and R⁴ are optionally substituted alkylene groups, preferably a C₄-C₁₀ alkylene groups;
   X is halogen;
   M is selected from a group consisting of Li, Mg, Ca, Cr, Mn, Fe, Co, Ni, Cu, Zn, Cd, Sn, Pb, Bi, La or Ce;
   Y is selected from halide, nitrate, phosphate and/or acetate,
   n is from 1 to 5; m is from 1 to 10; and
   the molar ratio of phosphonium salt (I) to compound (II) is in a range from 2:1 to 1:10.

As described herein R¹, R², R³ and R⁴ may be independently selected from substituted or unsubstituted, linear or branched C₁-C₁₈ alkyl, C₁-C₁₀ alkoxy, C₆-C₁₀ cycloalkyl, C₆-C₁₂ aryl or C₇-C₁₂ alkaryl.

As described herein, X may be chlorine or bromine.

As described herein M may be selected from a group consisting of Li, Ca, Cr, Co, Ni, Cu, Zn, Fe, Sn or La, more preferably Zn or Ni.

As described herein Y may be chloride.

As described herein R¹, R², R³ may be R⁴ are independently substituted with OH, SH, SR⁵, Cl, Br, F, I, NH₂, CN, NO₂, CO₂R⁵, CHO, COR⁵ and/or OR⁵, wherein R⁵ is selected from alkyl or cycloalkyl, preferably C₁-C₁₀ alkyl.

As described herein the molar ratio of phosphonium salt (I) to compound (II) may be in a range from 1:1 to 1:3, most preferably 1:2.

As described herein at least one of R¹, R², R³ or R⁴ may differ from the others, more preferably R¹, R² and R³ are alkyl or cycloalkyl and R⁴ is hydroxyalkyl, alkyl or aryl, most preferably R¹, R² and R³ are methyl and R⁴ is hydroethyl.

As described herein R¹, R² and R³ may be phenyl, and R⁴ is methyl.

As described herein the phosphonium salt may be selected from the group consisting of phosphonium chloride having the formula (R¹R²R³)-P⁺-R₄-OH Cl⁻. One phosphonium salt may be (2-hydroxyethyl)trimethylphosphonium chloride (CH₃)₃P⁺(CH₂CH₂OH)Cl⁻.

As described herein the phosphonium salt may be selected from the group consisting of phosphonium chlorides having the formula (R¹R²R³)-P⁺-R₄Cl.

As described herein the phosphonium salt may be also selected from chloro-substituted phosphonium chlorides having a formula Cl-(R¹R²R³)-P⁺-R₄Cl.

As described herein compound (II) has a freezing point less than 160°C, preferably less than 120°C.

Further described herein is a method for preparing an inventive deep eutectic solvent comprising the steps of combining at least one phosphonium salt (I) and at least one compound (II) and heating the combination to a temperature higher than 80°C, preferably 100-150°C, followed by cooling.

Surprisingly, it was found by the inventors that the deep eutectic solvents according to the present invention represent a new type of deep eutectic solvent having boiling points below 100°C and featuring significant altered chemical and physical properties compared to the prior art.

"Deep eutectic solvent" in terms of the present invention means a type of ionic solvent which is constituted by a mixture of compounds which form an eutectic with a melting point significant lower than that of its individual components.

Without having a limiting effect on the scope of protection of the present invention it is assumed that the surprising new chemical and physical properties of the inventive deep eutectic solvents can be induced due to the absence of hydrogen bonds. By avoiding the presence of hydrogen bond donors in the solvent mixture a completely different solubility behaviour mainly based on ionic interactions is achieved.

A method for preparing the deep eutectic solvents of the present inventions comprises the steps mixing at least one phosphonium salt (I) and at least one compound (II), heating and optionally stirring the mixture until a clear, viscous, uniform solution is formed and cooling the uniform solution to room temperature to obtain a deep eutectic solvent according to the present invention. Heating can take place to temperatures higher than 100°C if necessary. If the reaction is exothermic external heating may be discontinued until the reaction subsides. If required, the heating step can be repeated to achieve a clear uniform solution.

### Example 1

Methyltriphenyl-phosphonium bromide was mixed with zinc chloride in a 1:2 molar ratio. 1 mol of methyltriphenyl-phosphonium bromide was employed as a dry powder and was added to 2 mol of zinc chloride. The mixture comprising the phosphonium compound and zinc chloride was heated to 100°C with stirring until a clear, viscous, uniform solution was formed. The liquid was then allowed to cool to room temperature. The yield was quantitative and the product had a melting point of 100°C. About 20g of the synthesized deep eutectic solvent were put in a closed vial and kept in a dry space.

### Example 2

Methyltriphenyl-phosphonium bromide was mixed with nickel nitrate heaxahydrate in a 1:2 molar ratio. 1 mol of methyltriphenyl-phosphonium bromide was employed as a dry powder and was added to 2 mol of nickel nitrate heaxahydrate. The mixture comprising the phosphonium compound and nickel nitrate heaxahydrate was heated to 70°C with stirring until a clear, viscous, uniform solution was formed. The liquid was then allowed to cool to room temperature. The yield was quantitative and the product had a melting point of 30°C. About 20 g of the synthesized deep eutectic solvent was put in a closed vial and kept in a dry space.

### Example 3

2,4,6-trichlorobenzene (TCB) was added to about 10 g of DES prepared according to Example 1. The solubility of TCB was determined by taking samples from the solution and analysing them via HPLC until the measured solubility was constant. The solubility at room temperature was determined to be 12 wt%. The same procedure was used to measure the solubility of TCB in methyltriphenyl-ammonium bromide:zinc chloride in a molar ratio of 1:2. The solubility was determined to be 4 wt% at room temperature. This shows that the solubility of chlorinated hydrocarbons depends on the chemical structure of the DES.

### Example 4

Hexachlorobenzene (HCB) was added to about 10 g of DES according to Example 2. The solubility of HCB was determined by taking samples from the solution and analysing them via HPLC until the measured solubility was constant. The solubility at room temperature was determined to be 0.4 wt%. The same procedure was used to measure the solubility of HCB in methyltriphenyl-ammonium bromide:nickel nitrate hexahydrate in a molar ratio of 1:2. The solubility was determined to be 0.1 wt% at room temperature. This shows that the solubility of chlorinated hydrocarbons depends on the chemical structure of DES.

## Claims

1. Deep eutectic solvent constituted by a mixture of methyltriphenylphosphonium bromide and zinc chloride in a molar ratio from 1:1 to 1:3, preferably 1:2, or a mixture of methyltriphenylphosphonium bromide and nickel nitrate hexahydrate in a molar ratio from 1:1 to 1:3, preferably 1:2.

## Patentansprüche

1. Tiefeutektisches Lösungsmittel, bestehend aus einem Gemisch von Methyltriphenylphosphoniumbromid und Zinkchlorid in einem molaren Verhältnis von 1:1 bis 1:3, vorzugsweise 1:2, oder einem Gemisch von Methyltriphenylphosphoniumbromid und Nickelnitrathexahydrat in einem molaren Verhältnis von 1:1 bis 1:3, vorzugsweise 1:2.

## Revendications

1. Solvant eutectique profond constitué d'un mélange de bromure de méthyltriphénylphosphonium et de chlorure de zinc dans un rapport molaire compris entre 1:1 et 1:3, de préférence de 1:2, ou un mélange de bromure de méthyltriphénylphosphonium et de nitrate de nickel hexahydraté dans un rapport molaire compris entre 1:1 et 1:3, de préférence de 1:2.
